(19) Europäisches Patentamt
European Patent Office
Office européen des brevets

(11) EP 3 144 754 A1

(12) EUROPÄISCHE PATENTANMELDUNG

(43) Veröffentlichungstag:
22.03.2017 Patentblatt 2017/12

(51) Int Cl.:
G05B 19/19 (2006.01)   F16F 15/00 (2006.01)

(21) Anmeldenummer: 15185655.6

(22) Anmeldetag: 17.09.2015

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA

(71) Anmelder: Siemens Aktiengesellschaft
80333 München (DE)

(72) Erfinder:
• Künzel, Stefan
91056 Erlangen (DE)
• Hamm, Carsten
91058 Erlangen (DE)

(54) DÄMPFUNG VON LASTSCHWINGUNGEN OHNE ZUSÄTZLICHE MESSMITTEL AN DER LASTSEITE

(57)    Die Erfindung betrifft ein Verfahren zur Dämpfung von Lastschwingungen in einer Lastmechanik (26) mit einem geregelten Antrieb (32), bei dem eine Last (2) mechanisch mit einem Motor (6) über ein Federelement (28) gekoppelt ist, mit den Schritten:

- Ermittlung zumindest eines Winkelgeschwindigkeit-Istwerts ($\omega_{Mist}$),
- Bestimmung eines Motorträgheitsmoments ($J_M$),
- Ermittlung eines Motordrehmoment-Werts, insbesondere eines Motordrehmoment-Istwerts ($M_{ist}$),
- Berechnung eines Federdrehmoments ($M_F$) aus dem Winkelgeschwindigkeit-Istwert ($\omega_{Mist}$), dem Motorträgheitsdrehmoment ($J_M$) sowie dem Motordrehmoment-Wert, insbesondere dem Motordrehmoment-Istwert ($M_{ist}$),
- Zuführen des Federdrehmoments ($M_F$) zu einer Dämpferaufschaltung (44) zur Dämpfung der Lastschwingungen.

Weiterhin betrifft die Erfindung eine Vorrichtung zur Dämpfung von Lastschwingungen in einer Lastmechanik.

FIG 4

EP 3 144 754 A1

**Beschreibung**

Die Erfindung betrifft ein Verfahren und eine Vorrichtung, welche sich insbesondere zur Durchführung des Verfahrens eignet, zur Dämpfung von Lastschwingungen in einer Lastmechanik mit einem geregelten Antrieb, bei dem eine Last mechanisch mit einem Motor über ein Federelement gekoppelt ist.

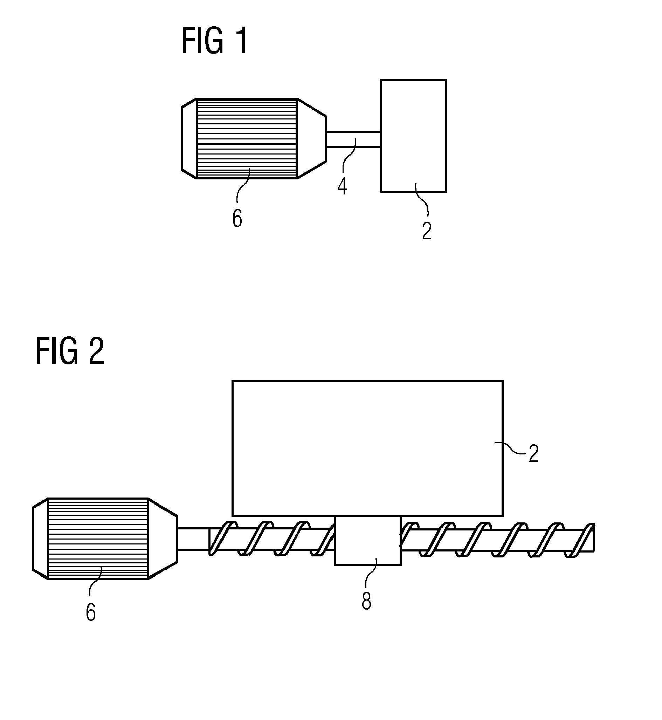

In der Antriebsregelung wird häufig eine Last 2 über eine Welle 4 von einem geregelten Antrieb, bestehend aus einem Stellglied, beispielsweise ein Stromrichtergerät, und einem Motor 6, bewegt. Eine derartige Antriebskonfiguration ist in der FIG 1 näher dargestellt. Eine weitere Antriebskonfiguration ist in der FIG 2 schematisch veranschaulicht. Bei dieser weiteren Antriebskonfiguration wird die Last 2 über ein Getriebe 8 vom Motor 6 eines geregelten Antriebs bewegt. Dabei ist es unerheblich, ob es sich beim Motor 6 oder Last 2 um eine lineare oder eine rotatorische Bewegung handelt und ob das Getriebe 8 eine rotierende Bewegung in eine lineare Bewegung umsetzt oder umgekehrt, ob eine rotierende Bewegung in eine andere rotierende Bewegung oder eine lineare Bewegung in eine andere lineare Bewegung umgesetzt werden.

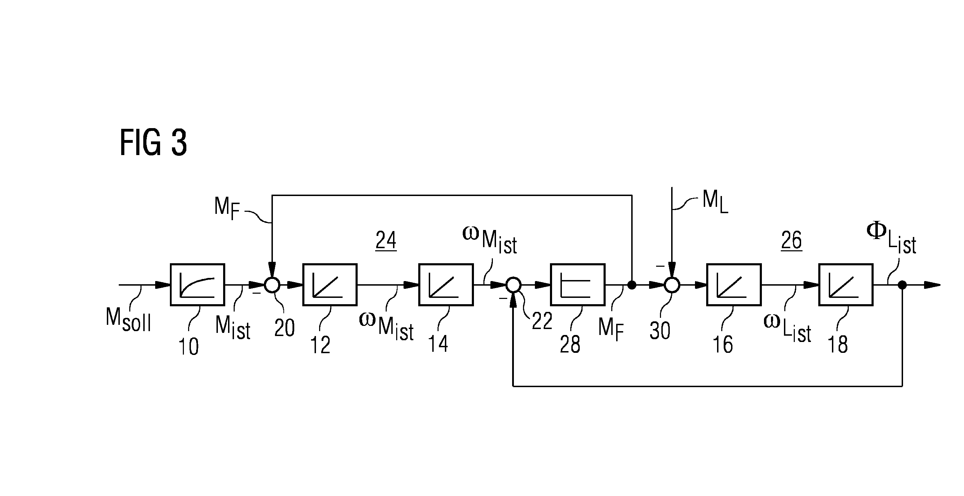

In der FIG 3 ist ein Blockschaltbild einer Regelungsstrecke für eine dominante Eigenfrequenz näher dargestellt. Bei diesem Blockschaltbild ist mit 10 ein Stromregler, mit 12 ein erster Integrator, mit 14 ein zweiter Integrator, mit 16 ein dritter Integrator, mit 18 ein vierter Integrator und mit 20 ein Subtrahierer und 22 ein Addierer bezeichnet. Dem Stromregler 10 wird ein Motormoment-Sollwert $M_{soll}$ zugeführt. Der Subtrahierer 20 ist zwischen dem Stromregler 10 und dem ersten Integrator 12 angeordnet. Am Ausgang dieses ersten Integrators steht ein Winkelgeschwindigkeit-Istwert $\omega_{Mist}$ bzw. der Motordrehzahl-Istwert an, der dem zweiten Integrator 14 zugeführt ist. Ausgangsseitig dieses zweiten Integrators steht ein Winkel-Istwert $\Phi_{Mist}$ bzw. Motorlage-Istwert an, der einen ersten Eingang des Addierers 22 zugeführt ist. Der invertierende Eingang dieses Addierers 22 ist mit einem Ausgang des vierten Integrators verbunden, der eingangsseitig mit einem Ausgang des dritten Integrators 16 verknüpft ist. Am Ausgang des dritten Integrators steht ein Lastdrehzahl-Istwert $\omega_{List}$ an, wogegen am Ausgang des vierten Integrators 18 ein Lastlage-Istwert $\Phi_{List}$ ansteht. Diese beiden Integratoren 12 und 14 bilden eine Motormechanik 24, wogegen die beiden Integratoren 16 und 18 eine Lastmechanik 26 veranschaulichen. Die Motormechanik 24 und die Lastmechanik 26 sind mittels einer Welle 4 bzw. eines Getriebes 8 miteinander gekoppelt. Regelungstechnisch ist diese mechanische Kopplung durch eine Federkomponente 28 veranschaulicht, deren Proportionalitätsfaktor korrespondierend zur Elastizität der Welle 4 bzw. des Getriebes 8 ist. Der am Ausgang des vierten Integrators 18 anstehende Lastlage-Istwert $\Phi_{List}$ wird auf dem Addierer 22 gegengekoppelt aufgeschaltet. Das Federdrehmoment $M_F$ der Federkomponente 28 wird auf den Subtrahierer 20, an dem ein Motordrehmoment-Istwert $M_{ist}$ ansteht, geschaltet. Außerdem wird das Federdrehmoment $M_F$ mittels eines weiteren Addierers 29 auf ein Lastdrehmoment $M_L$ geschaltet.

Bei bestimmten Verhältnissen von Motor- und Lastträgheit und der Elastizität der Welle 4 bzw. des Getriebes 8 entstehen niederfrequente Schwingungen zwischen Motor 6 und Last 2, die auch als Lastschwingungen bezeichnet werden. Diese Lastschwingungen sind häufig sehr störend und regelungstechnisch schwer beherrschbar.

Die folgenden Ausführungen werden zur Veranschaulichung auf rotierende Bewegungen beschränkt, die Überlegungen gelten aber in gleicher Weise auch für lineare oder gemischt lineare/rotierende Bewegungen.

Häufig setzt man bei schwingungsfähigen Systemen Zustandsregler zur Dämpfung solcher Lastschwingungen ein. Diese Regler sind allerdings häufig so komplex, dass eine Anwendung nur durch akademische Regelungsspezialisten möglich ist. Für eine breite Produktlösung, vor allem mit Hinblick auf eine einfache Inbetriebnahme, scheinen solche Zustandsregler daher ungeeignet. Bei Versagen einer solchen automatischen Inbetriebnahme ist ein händisches Eingreifen nur noch durch Fachleute möglich. Ein Problem der Inbetriebnahme eines Zustandsreglers ist, dass man mehrere Rückführungen gleichzeitig verstellen muss, da sich die Rückführungen gegenseitig beeinflussen. Dieses Problem hat man prinzipiell auch, wenn man Aufschaltwerte auf das Drehmoment erzeugt, da ein Drehzahlregler die Aufschaltung zum Teil wieder wegregelt und damit beeinflusst. Dies könnte man verhindern, wenn man den Motordrehzahlregler langsam eingestellt, allerdings muss man dann mit einem langsamen und wenig steifen Regler leben. Ein gutes Störverhalten gelingt damit kaum. In Fachbeiträgen wird öfters der "virtuelle Sensor" propagiert, der mit einem gesteuerten Modell der schwingungsfähigen Strecke die fehlende Messgröße beschaffen soll. Diese Ansätze sind aufwändig und wenig robust gegen Streckenänderungen.

Eine andere bekannte Lösung benutzt eine Differenzdrehzahl- und Differenzlagerückführung auf den Winkelgeschwindigkeit - Sollwert des Motors 6. Außerdem liefert auch ein überlagerter Motordrehzahlregler einen Winkelgeschwindigkeit-Sollwert, der zu der Differenzdrehzahl- und Differenzlagerückführung addiert wird. Damit erhält man eine ähnlich komplexe Struktur, wie die des klassischen Zustandsreglers, dessen Einstellung schwierig ist. Da der Motordrehzahlregler die Rückführungswerte zum Teil kompensiert, beeinflusst die Einstellung des Motordrehzahlreglers die Wirkung der Aufschaltung im Allgemeinen stark.

Ein Ausweg könnte sein, direkt die Lastdrehzahl ohne Motordrehzahlregler zu regeln. Aber auch das ist problematisch, denn hierbei weist die Regelungsstrecke drei Pole am Stabilitätsrand auf und verfügt über keine Nullstelle, was eine stabile Regelung nur in einem schmalen Band möglich macht. Nur als Hinweis sei hier angemerkt, dass ein weiterer Pol am Stabilitätsrand durch einen I-Anteil des Reglers hinzukommt. Damit ist eine Inbetriebnahme schwierig.

Zurzeit gibt es keine Maßnahmen zur aktiven Dämpfung von Lastschwingungen ohne Lastmessung. Setzt man keine Maßnahmen zur aktiven Bedämpfung von Lastschwingungen ein, so muss man durch die Bewegungsführung eine Anregung der Schwingung vermeiden. Dies hat zur Folge, dass Bewegungsvorgänge vergleichsweise lange dauern und dass man nur eine geringe Regelungssteifigkeit erzielen kann. Störungen können dann Schwingungen anregen, die nicht aktiv bekämpft werden. Es gibt zwar Sollwertfilter die für alle Größen der Bahnvorgabe angewendet werden müssten, um die Anregung der Schwingung durch Sollwertänderungen zu vermeiden. Eine Anregung durch eine Lastmomentänderung / Störung wird damit aber nicht gedämpft.

Eine aktive Bedämpfung schwach gedämpfter Eigenfrequenzen durch Makroaktoren kann beispielsweise durch ein Verfahren erfolgen, das in der deutschen Patentschrift 102 46 093 C1 beschrieben und auch unter dem Namen APC (Advanced Position Control) bekannt ist. In manchen Fällen ist jedoch die aktive Bedämpfung nicht oder nur sehr schwer möglich.

Aufgabe der vorliegenden Erfindung ist es daher, eine Möglichkeit zur Dämpfung von niederfrequenten Lastschwingungen bei Antrieben mit Motor und Last zu finden, die bei guten Regelungsergebnissen auch eine einfache Inbetriebnahme ermöglichen.

Die auf das Verfahren bezogene Aufgabe wird gelöst durch die Angabe eines Verfahrens zur Dämpfung von Lastschwingungen in einer Lastmechanik mit einem geregelten Antrieb, bei dem eine Last mechanisch mit einem Motor über ein Federelement gekoppelt ist, mit den Schritten:

- Ermittlung zumindest eines Winkelgeschwindigkeit-Istwerts,
- Bestimmung eines Motorträgheitsmoments,
- Ermittlung eines Motordrehmoment-Werts, insbesondere eines Motordrehmoment-Istwerts,
- Berechnung eines Federdrehmoments aus dem Winkelgeschwindigkeit-Istwert, dem Motorträgheitsdrehmoment sowie dem Motordrehmoment-Wert, insbesondere dem Motordrehmoment-Istwert,
- Zuführen des Federdrehmoments zu einer Dämpferaufschaltung zur Dämpfung der Lastschwingungen.

Die auf die Vorrichtung bezogene Aufgabe wird gelöst durch die Angabe einer Vorrichtung zur Dämpfung von Lastschwingungen in einer Lastmechanik mit einem geregelten Antrieb, bei dem eine Last mechanisch mit einem Motor über ein Federelement gekoppelt ist, wobei die Ermittlung zumindest eines Winkelgeschwindigkeit-Istwerts sowie eines Motordrehmoment-Werts, insbesondere eines Motordrehmoment-Istwerts und eine Bestimmung eines Motorträgheitsmoments vorgesehen ist, und wobei anschließend eine Berechnung eines Federdrehmoments aus dem Winkelgeschwindigkeit-Istwert, dem Motorträgheitsdrehmoment sowie dem Motordrehmoment-Wert, insbesondere dem Motordrehmoment-Istwert, sowie eine Zuführung dieses Federdrehmoments zu einer Dämpferaufschaltung zur Dämpfung der Lastschwingungen vorgesehen ist.

Insbesondere eignet sich die Vorrichtung zur Durchführung des erfindungsgemäßen Verfahrens.

Es wurde erfindungsgemäß erkannt, dass das Federdrehmoment also einen von zwei Bestandteilen darstellt, der zur Lastbeschleunigung führt. Das Federdrehmoment enthält nämlich den Anteil der Lastbeschleunigung, der zur Schwingung führt, während der Anteil des Lastdrehmoments normalerweise unabhängig von der Schwingung ist. Dadurch kann das Federdrehmoment zur Lastschwingungsdämpfung herangezogen werden. Als Eingangsgrößen sind nur der Motordrehmoment-Wert, die Winkelgeschwindigkeit-Istwert und das Motorträgheitsdrehmoment notwendig, die üblicherweise bekannt sind bzw. als berechnete Größen oder als Messgrößen vorliegen.

Durch die Erfindung kann man die Beschleunigung isolieren, die die Lastschwingung anfacht. Dadurch kann man diese für die Dämpfung in gleicher Weise wie die Istwerte auf der Lastseite heranziehen. Die vorhandene Infrastruktur zur Schwingungsdämpfung kann dann mit wenig Zusatzaufwand genutzt werden.

Der Vorteil dieser Lösung ist, dass man Lastschwingungen dämpfen kann, ohne zusätzliche Messeinrichtungen betreiben zu müssen. Außerdem ist diese Lösung im Vergleich zu anderen Lösungen robuster, weil sie nur auf vorhandene Messgrößen und das nichtveränderliche Motorträgheitsdrehmoment zugreift. Die Lasteigenschaften (Federsteifigkeit, Lastträgheit) spielen keine Rolle mehr. Natürlich beeinflusst die Strecke die Eigenfrequenz und damit auch die optimale Einstellung der Rückführverstärkung, man kann hier aber robuste Einstellungen wählen, denn die Dämpfungswirkung bleibt auch bei nicht optimaler Einstellung erhalten. Das Verfahren/Vorrichtung kann mit nur wenigen Anpassungen in die bisherige Struktur anderer bekannter Dämpfungsverfahren integriert werden, wodurch die bekannten Einstellvorschriften angewandt werden können.

Es ist zu beachten, dass das Motorträgheitsdrehmoment lediglich bestimmt werden muss. Dies kann auch z.B. durch Nachlesen der Angaben im Betriebshandbuch etc. bewerkstelligt werden, da viele Motorhersteller das Motorträgheitsdrehmoment angeben.

Der Motordrehmoment-Wert, insbesondere der Motordrehmoment-Istwert, kann hier entweder als Istwert aus dem Modell kommen oder auch ein Sollwert sein. Letzteres ist insbesondere dann der Fall, wenn der Regler schnell genug ausregelt und die Differenz keine große Rolle spielt. Ggf. kann auch bei dem Motordrehzahl-Istwert der Motordrehzahl-Sollwert herangezogen werden.

In den Unteransprüchen sind weitere vorteilhafte Maßnahmen aufgelistet, die beliebig miteinander kombiniert werden können, um weitere Vorteile zu erzielen.

Bevorzugt erfolgt zunächst eine Ermittlung zumindest des Winkel-Istwerts durch einen Sensor und/oder ein Messsystem, wobei aus diesem der Winkelgeschwindigkeit-Istwert ermittelt wird. Die Erfindung kann vorteilhafterweise an die bisher bekannten Verfahren, z.B. das APC-System zur Schwingungsdämpfung adaptiert werden, da diese mit einem Sensor/Messsystem auf der Lastseite arbeiten. Dieser Sensor beschafft dann die Lastdrehzahl oder die Lastbeschleunigung, die dann auf den Winkelgeschwindigkeit-Sollwert zurückgeführt wird. In die vorhandene Infrastruktur zur Schwingungsdämpfung kann dann mit wenig Zusatzaufwand die Erfindung integriert werden.

In einer bevorzugten Ausgestaltung wird ein erster Zwischenwert durch Anwendung der Differentiation erster Ordnung nach der Zeit auf den Winkelgeschwindigkeit-Istwert und Beaufschlagung, insbesondere Multiplikation, mit dem Motorträgheitsdrehmoment ermittelt. Dabei ist zu beachten, dass das Motorträgheitsdrehmoment eine Konstante ist. Daher kann die Differentiation erster Ordnung nach der Zeit auf den Winkelgeschwindigkeit-Istwert nach oder vor der Multiplikation mit dem Motorträgheitsdrehmoment angewendet werden.

In bevorzugter Ausgestaltung umfasst die Lastmechanik zudem noch ein Motormodell mit Stromregler, welcher dem geregelten Antrieb vorgeschaltet ist und aus welchem der Motordrehmoment-Wert, insbesondere der Motordrehmoment-Istwert bestimmt wird. Normalerweise wird der Motordrehmoment-Wert, insbesondere der Motordrehmoment-Istwert aus dem gemessenen Strom und dem Motormodell bestimmt. Diese kann auch mit einem geberlosen Motormodell erzeugt worden sein, sodass nicht einmal ein Motorgeber zwingend notwendig ist. Natürlich können weniger dynamische Modell-Istwerte nur zum Dämpfen für entsprechend niedrigere Frequenzen eingesetzt werden.

Bevorzugt wird der Motordrehmoment-Wert, insbesondere der Motordrehmoment-Istwert einer Filterung, insbesondere einer Glättung, d.h. einem Filter mit Glättungsfunktion, zum Bilden eines zweiten Zwischenwerts zugeführt. Das Federdrehmoment wird hier geglättet erzeugt, weil zur Differenzierung eine Glättung sinnvoll ist, um das Rauschen zu entfernen.

In einem weiteren bevorzugten Ausführungsbeispiel werden der erste Zwischenwert und der zweite Zwischenwert einem Subtrahierer zum Berechnen des Federdrehmoments zugeführt. Dabei ergibt sich das Federdrehmoment durch die Subtraktion des ersten Zwischenwerts vom zweiten Zwischenwert.

Bevorzugt wird ein erster Zwischenwert durch Multiplikation des differenzierten Winkelgeschwindigkeit-Istwerts mit dem Motorträgheitsdrehmoment ermittelt und ein zweiter Zwischenwert durch den Motordrehmoment-Wert, insbesondere den Motordrehmoment-Istwert bestimmt, wobei der erste Zwischenwert und der zweite Zwischenwert einem Subtrahierer zum Berechnen des Federdrehmoments zugeführt werden.

Bevorzugt besteht die Dämpferaufschaltung aus zumindest zwei Dämpferpassagen. Der zweiten Dämpferpassage wird hier als ein Ausführungsbeispiel nicht das Federmoment, sondern eine Drehzahl, d.h. das integrale Federmoment zugeführt. Dies wird erreicht, indem zur Bestimmung eines dritten Zwischenwertes der ermittelte Winkelgeschwindigkeit-Istwert mit dem Motorträgheitsmoment multipliziert und anschließend einen Hochpassfilter zuführt wird. Zudem wird zur Bestimmung eines vierten Zwischenwertes der ermittelte Motordrehmoment-Wert, insbesondere der ermittelte Motordrehmoment-Istwert ohne Offset integriert. Zur Bestimmung des integralen Federmoments werden dann der dritte und der vierte Zwischenwert einem Subtrahierer zugeführt. Das Ergebnis wird nun der zweiten Dämpferpassage zugeführt.

Bevorzugt wird das Federdrehmoment einem APC-System als Dämpferaufschaltung zugeführt. Es kann aber auch jedem anderen System zur Dämpfung zugeführt werden.

In bevorzugter Ausgestaltung wird die Dämpferaufschaltung durch zumindest eine erste Dämpfungspassage ausgestaltet, zum Ermitteln zumindest einer Dämpfungsfrequenz mit einer Eigenfrequenz zum Bedämpfen wenigstens einer Lastschwingung, insbesondere durch gegengekoppelte Aufschaltung auf einen vorbestimmten Winkelgeschwindigkeit-Sollwert. Bevorzugt weist die erste Dämpfungspassage eingangsseitig zumindest einen ersten Bandpass auf, welchem zumindest das Federdrehmoment zugeführt wird. Mit einem Bandpass werden die Frequenzbereiche ausgewählt, in denen die Dämpfung wirken soll, um Rückwirkungen auf andere Frequenzbereiche zu vermeiden z. B. weil noch weitere Eigenfrequenzen vorhanden sind, die durch die Dämpfung angefacht werden können. D.h. ein (weiterer) Bandpass filtert dann den entsprechenden Bereich heraus. Es hat sich gezeigt, dass für weitere Eigenfrequenzen ggf. nicht die Lastbeschleunigung, sondern die Lastdrehzahl zurückgeführt werden muss.

Weitere Merkmale, Eigenschaften und Vorteile der vorliegenden Erfindung ergeben sich aus der nachfolgenden Beschreibung unter Bezugnahme auf die beiliegende Figuren. Darin zeigen schematisch:

FIG 1    eine erste Antriebskonfiguration mit Motor und Last,

FIG 2    eine zweite Antriebskonfiguration mit Motor und Last,

FIG 3    ein Blockschaltbild einer Regelungsstrecke für eine dominante Eigenfrequenz,

FIG 4    ein erstes Funktionsschaubild einer Vorrichtung zur Durchführung des erfindungsgemäßen Verfahrens bei einem geregelten Antrieb,

FIG 5    ein zweites Funktionsschaubild einer Vorrichtung zur Durchführung des erfindungsgemäßen Verfahrens bei einem geregelten Antrieb,

FIG 6    Ergebnis eines Beispiels mit erfindungsgemäßer Dämpfung.

Obwohl die Erfindung im Detail durch die bevorzugten Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

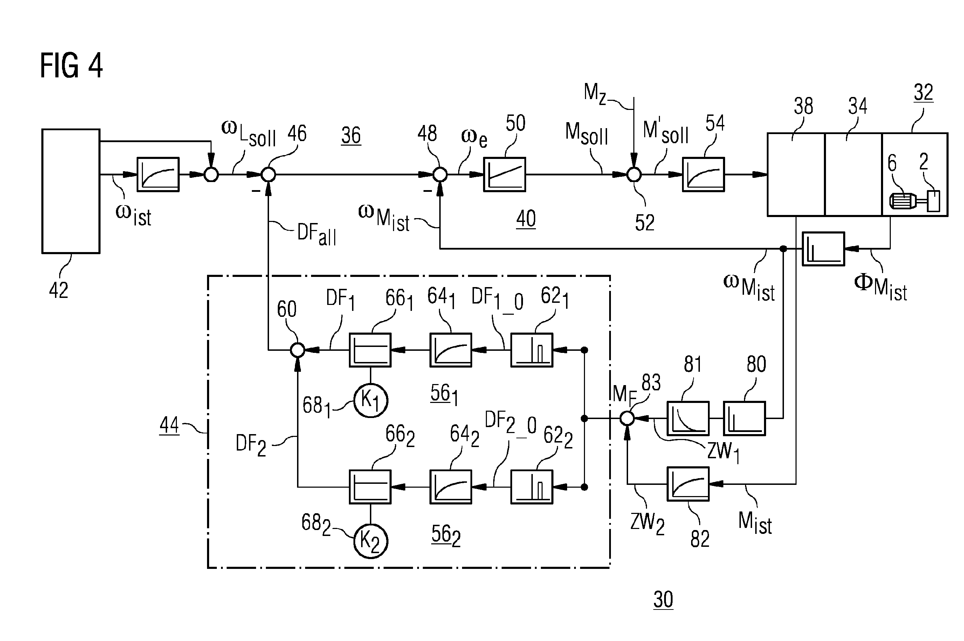

In der FIG 4 ist eine Antriebsregeleinrichtung 30 eines geregelten Antriebs 32 mit Motor 6 und Last 2 näher dargestellt, wobei Teile dieser Antriebsregeleinrichtung 30 detaillierter dargestellt sind. Eine handelsübliche Antriebsregeleinrichtung 30 weist ein Stellglied 34, beispielsweise ein Stromrichter, insbesondere ein selbstgeführter Pulswechselrichter, und eine Regelung 36 auf. Diese Regelung 36 besteht beispielsweise aus einem Motormodell mit Stromregler 38, einem Drehzahlregelkreis 40 und einem Lageregelkreis 42. Diese Regelkreise 38, 40 und 42 bilden eine Regeldämpferpassage. D.h., dem Drehzahlregelkreis 40 ist der Lageregelkreis 42 überlagert und dem Motormodell mit Stromregler 38 ist der Drehzahlregelkreis 40 überlagert. Die Regelkreise 38 und 42 sind hier im Einzelnen nicht angegeben, da diese zum Verständnis der Erfindung nicht benötigt werden.

Außerdem weist diese Antriebsregeleinrichtung 30 eine Dämpferaufschaltung 44 auf, die ausgangsseitig mittels eines Addierers 46 auf einen bereitgestellten Winkelgeschwindigkeit -Sollwert $\omega_{Lsoll}$ aufgeschaltet wird. Dabei steht dieser Winkelgeschwindigkeit-Sollwert $\omega_{Lsoll}$ an einem nicht invertierenden Eingang an und die Dämpferaufschaltung 44 ist ausgangsseitig mit dem invertierenden Eingang des Addierers 46 verknüpft. Dadurch wird das Ausgangssignal $Df_{all}$ der Dämpferaufschaltung 44 gegengekoppelt auf den Winkelgeschwindigkeit-Sollwert $\omega_{Lsoll}$ aufgeschaltet.

Der Drehzahlregelkreis 40 weist eingangsseitig einen Vergleicher 48 und ausgangsseitig einen Regler 50 auf. Dieser Regler 50 ist eingangsseitig mit einem Ausgang des Vergleichers 48 verknüpft. Mittels dieses Vergleichers 48 wird eine Regelabweichung, hier die Abweichung $\omega_e$ eines Winkelgeschwindigkeit-Istwertes $\omega_{Mist}$ von einem vorbe-stimmten Winkelgeschwindigkeit-Sollwert $\omega_{Lsoll}$, bestimmt. Mittels des Reglers 50 wird eine Stellgröße erzeugt, die so beschaffen ist, dass die Regelabweichung $\omega_e$ zu Null wird. Damit ist dann der Winkelgeschwindigkeit -Istwert $\omega_{Mist}$ dem Winkelgeschwindigkeit-Sollwert $\omega_{Lsoll}$ nachgeführt. Als Stellgröße des Reglers 50 erhält man bei einem Drehzahlregelkreis 40 einen Motordrehmoment-Sollwert $M_{soll}$, dem beispielsweise ein Stördrehmoment $M_Z$, z.B. Nutrasten, mittels eines Addierers 52 aufgeschaltet wird. Am Ausgang dieses Addierers 52 steht somit ein modifizierter Motordrehmoment -Sollwert $M'_{soll}$ an, der mittels eines Filters 54 mit einem Eingang des unterlagerten Motormodells mit Stromregler 38 verbunden ist.

Eingangsseitig wird der Dämpferaufschaltung 44 nun erfindungsgemäß das aktuelle Federdrehmoment $M_F$ zum Dämpfen zugeführt.

Erfindungsgemäß wurde erkannt, dass das Federdrehmoment $M_F$ also einen von zwei Bestandteilen darstellt, der zur Lastbeschleunigung führt. Dabei wurde erkannt, dass sich das Federdrehmoment $M_F$ mit folgender Gleichung ergibt:

$$(1) \qquad M_F = M_{ist} - J_M * \frac{d\omega_{Mist}}{dt}$$

wobei

$\omega_{Mist}$ = Winkelgeschwindigkeit-Istwert,
$J_M$ = Motorträgheitsmoments,
$M_{ist}$ = Motordrehmoment-Istwert.

Das Federdrehmoment $M_F$ sorgt für die Beschleunigung der Lastseite. Ebenfalls wurde der Zusammenhang für die Lastbeschleunigung $\frac{d\omega_{List}}{dt}$ erkannt:

$$(2) \qquad \frac{d\omega_{List}}{dt} = M_F - M_L$$

Das Federdrehmoment $M_F$ stellt also einen von zwei Bestandteilen dar, der zur Lastbeschleunigung $\frac{d\omega_{List}}{dt}$

führt. Das Federdrehmoment $M_F$ enthält den Anteil der Lastbeschleunigung, der zur Schwingung führt, während der Lastdrehmomentanteil $M_L$ normalerweise unabhängig von der Schwingung ist. Dadurch kann das Federdrehmoment $M_F$ nach (1) zur Lastschwingungsdämpfung herangezogen werden. Als Eingangsgrößen ist nur der Motordrehmoment-Wert, insbesondere der Motordrehmoment-Istwert $M_{ist}$, der Winkelgeschwindigkeit-Istwert $\omega_{Mist}$ und das Motorträgheitsdrehmoment $J_M$ notwendig, die üblicherweise bekannt sind, bzw. als berechnete Größen oder als Messgrößen vorliegen.

Ein Sensor oder ein Messsystem misst den Winkel-Istwert $\Phi_{Mist}$ aus dem der Winkelgeschwindigkeit-Istwert $\omega_{Mist}$ bestimmt wird. D.h. die Motordrehzahl ist bekannt. Sie kann auch mit einem geberlosen Motormodell erzeugt worden sein, sodass nicht einmal ein Motorgeber zwingend notwendig ist. Natürlich können weniger dynamische Modell-Istwerte nur zum Dämpfen für entsprechend niedrigere Frequenzen eingesetzt werden. Dieser wird nun mit dem Motorträgheitsdrehmoment $J_M$ multipliziert mittels eines Multiplizierers 80. Anschließend wird das Ergebnis zur Bildung eines ersten Zwischenergebnisses $ZW_1$ nach der Zeit t differenziert (Differenzierer 81). Auch kann selbstverständlich zuerst nach der Zeit t differenziert werden und anschließend mit dem Motorträgheitsdrehmoment $J_M$ multipliziert werden, da das Motorträgheitsdrehmoment $J_M$ eine Konstante ist.

Aus dem Motormodell mit Stromregler 38 und aus dem gemessenen Strom wird zudem der Motordrehmoment-Wert, insbesondere der Motordrehmoment-Istwert $M_{ist}$ bestimmt. Im geberlosen Betrieb wird der Winkelgeschwindigkeit-Istwert $\omega_{Mist}$ auch aus dem Motormodell bestimmt, ist aber normalerweise gegenüber einem gemessenen Wert verzögert. Das gilt aber nicht für den Motordrehmoment-Wert, insbesondere den Motordrehmoment-Istwert $M_{ist}$, der auch im geberlosen Betrieb kaum verzögert vorliegt. Dieser wird einem Glättungsfilter 82; d.h. einem Filter mit Glättungsfunktion zur Bildung eines zweiten Zwischenwertes $ZW_2$ zugeführt. Selbstverständlich können auch alle anderen geeigneten Filter herangezogen werden.

Die gebildeten Zwischenwerte $ZW_1$ und $ZW_2$ werden nun einem Subtrahierer 83 zugeführt. Dort wird der erste Zwischenwert $ZW_1$ vom zweiten Zwischenwert $ZW_2$ abgezogen und damit das Federdrehmoment $M_F$ gebildet. Dieses wird nun der Dämpferaufschaltung 44 zugeführt. Dabei besteht die Dämpferaufschaltung 44 aus zumindest einem oder mehreren Dämpferpassagen $56_1$ und $56_2$. Hier sind zwei Dämpferpassagen $56_1$ und $56_2$ aufgezeigt, die ausgangsseitig mittels eines weiteren Addierers 60 miteinander verknüpft sind.

Die Dämpferpassagen $56_1$ bzw. $56_2$ weisen eingangsseitig einen Bandpass $62_1$ bzw. $62_2$, dem ein Filter $64_1$ bzw. $64_2$ nachgeschaltet ist, und ausgangsseitig einen Verstärker $66_1$ bzw. $66_2$ auf, der eingangsseitig mit einem Ausgang des Filters $64_1$ bzw. $64_2$ verknüpft ist. Der Verstärker $66_1$ bzw. $66_2$ ist außerdem mit einem einstellbaren Faktor $68_1$ bzw. $68_2$ verbunden. Mittels dieser Dämpferaufschaltung 44 mit zwei Passagen sollen zwei Eigenfrequenzen $f_1$ und $f_2$ der niederfrequenten Lastschwingungen gedämpft werden, wobei diese beiden Eigenfrequenzen $f_1$, $f_2$ unterschiedlich bedämpft werden sollen, da den Verstärkern $66_1$ und $66_2$ jeweils unterschiedliche Verstärkungsfaktoren K1 und K2 zugeführt werden. Am Ausgang eines jeden Verstärkers $66_1$ und $66_2$ steht ein Ausgangssignal $Df_1$ und $Df_2$ der Dämpferpassagen $56_1$ und $56_2$ an. Diese Ausgangssignale $Df_1$ und $Df_2$ der Dämpferpassagen $56_1$ und $56_2$ werden mittels des Addierers 60 zum Ausgangssignal $Df_{all}$ der Dämpferaufschaltung 44 zusammengesetzt.

Die im geregelten Antrieb 32 auftretenden niederfrequenten Lastschwingungen werden gemessen. Dabei werden im dargestellten Beispiel nur zwei Eigenfrequenzen $f_1$ und $f_2$ aus den niederfrequenten Lastschwingungen isoliert. Am Ausgang des Bandpasses $62_1$ bzw. $62_2$ steht ein bandpassgefilertes Signal $Df_{1\_0}$ bzw. $Df_{2\_0}$ an. Bei der Inbetriebnahme werden hier zumindest die Eigenfrequenzen $f_1$ und $f_2$ der auftretenden niederfrequenten Lastschwingungen gemessen. Anhand dieser Messungen wird zumindest ein Bandpass $62_1$ einer Dämpferpassage $56_1$ der Dämpferaufschaltung 44 so eingestellt, dass nur eine Eigenfrequenz $f_1$ der Lastschwingung durchgelassen wird. Am Ausgang dieses Bandpasses $61_1$ erhält man ein bandpassgefilertes Signal mit der Eigenfrequenz $f_1$. In Abhängigkeit der Eigenfrequenz $f_1$ und dem Grad der Dämpfung wird der Verstärkungsfaktor K1 entsprechend gewählt. Entsprechendes gilt für die Frequenz $f_2$. Durch die gegengekoppelte Aufschaltung des Ausgangssignals $Df_{all}$ der Dämpferaufschaltung 44 wird die Eigenfrequenz $f_1$, $f_2$ der niederfrequenten Lastschwingung gedämpft.

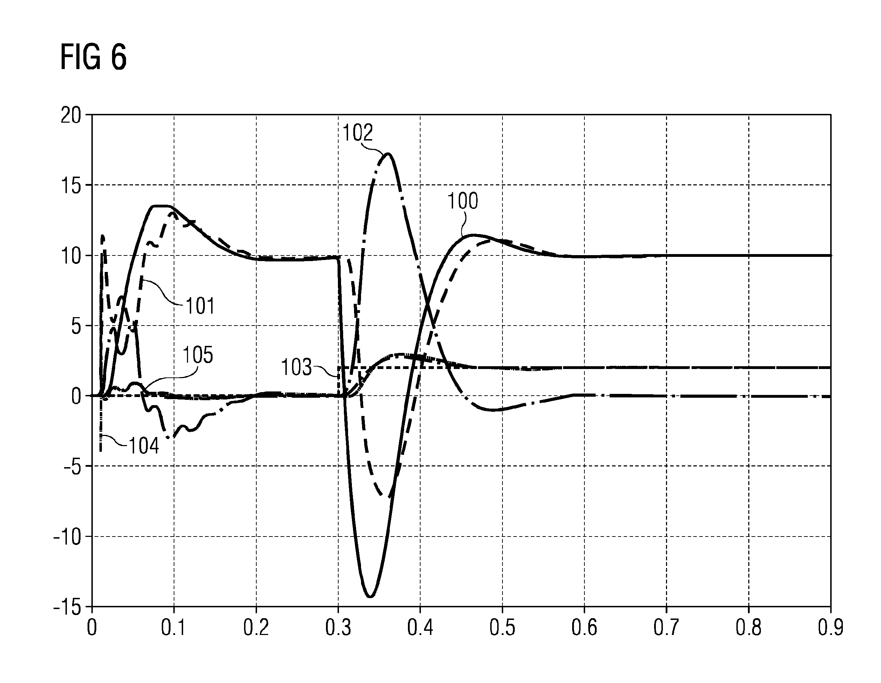

Das Federdrehmoment $M_F$ wird hier erfindungsgemäß geglättet erzeugt, weil zur Differenzierung eine Glättung sinnvoll ist, um das Rauschen zu entfernen. Mit einem Bandpass $62_{1,2}$ werden die Frequenzbereiche ausgewählt, in denen die Dämpfung wirken soll, um Rückwirkungen auf andere Frequenzbereiche zu vermeiden z. B. weil noch weitere Eigenfrequenzen vorhanden sind, die durch die Dämpfung angefacht werden können. Die Erfindung wurde -wie in FIG 6 beschrieben- erfolgreich erprobt.

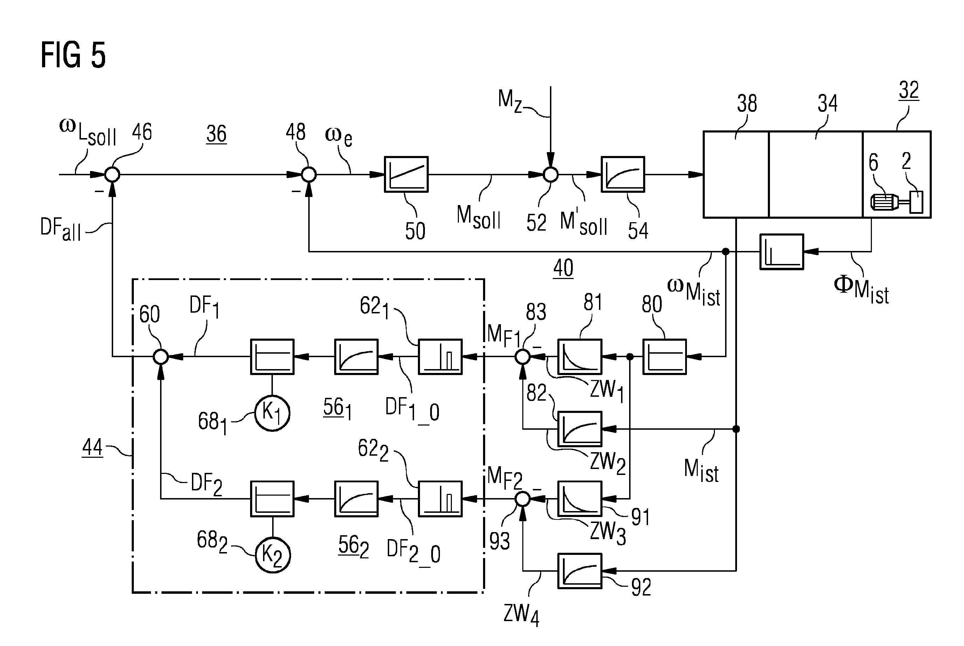

FIG 5 zeigt ein weiteres Ausführungsbeispiel. Auch hier ist die Dämpferaufschaltung 44 mit zwei Dämpferpassagen $56_{1,2}$ ausgestaltet. Der zweiten Dämpferpassage $56_2$ kann nun nicht das wie oben berechnete Federmoment $M_F$, sondern die Drehzahl $\int M_F$ zugeführt werden. Dies wird erreicht, indem zur Bestimmung eines dritten Zwischenwertes $ZW_3$ der ermittelte Winkelgeschwindigkeit-Istwert $\omega_{Mist}$ mit dem Motorträgheitsmoment $J_M$ multipliziert und anschließend einem Hochpassfilter 91 zuführt wird. Zudem wird zur Bestimmung eines vierten Zwischenwertes $ZW_4$ der ermittelte Motordrehmoment-Wert, insbesondere der ermittelte Motordrehmoment-Istwert $M_{ist}$ ohne Offset integriert. Zur Bestimmung des integralen Federmoments $\int M_F$ werden dann der dritte Zwischenwert $ZW_3$ und der vierte Zwischenwert $ZW_4$ einem Subtrahierer 93 zugeführt. Dieses wird nun der zweiten Dämpferpassage 44 zugeführt.

Die zweite Dämpferpassage braucht hier daher nicht das Federdrehmoment $M_F$ (= Beschleunigung), sondern eine Drehzahl, also das Integral des Federdrehmoments $M_F$ mit einem nachgeschaltetem Hochpass. Weil der Differenzierer und der Integrator sich aufheben, kann man auch die Struktur neu zeichnen und die Glättung beim Differenzieren weglassen.

FIG 6 zeigt ein Ergebnis einer Simulation von FIG 4 mit einem 3-Massenschwinger, wobei die niedrigere Eigenfrequenz mit diesem Verfahren gedämpft wird. Anfangs wird ein Drehzahlsollwertsprung auf 10 1/s ausgeführt und bei 0.3s ein sprungförmiges Lastdrehmoment von 2 Nm aufgeschaltet. Die Winkelgeschwindigkeit-Istwert $\omega_{Mist}$ hat hier die Nummer 100, der Winkelgeschwindigkeit -Sollwert $\omega_{Lsoll}$ hat hier die Nummer 101, das Signal $Df_{all}$ also der Dämpfungsaufschaltwert hat hier die Nummer 102, das Lastdrehmoment $M_L$ die Nummer 103, der Motordrehmoment-Istwert $M_{ist}$ hat die Nummer 104 und das (tatsächliche) Federdrehmoment $M_F$ wird als 105 bezeichnet. In der Simulation haben die Eigenschwingungen keine Eigendämpfung. Der Regler dämpft sowohl im Führungsverhalten, als auch im Lastverhalten gut. Die Dämpfung ist ohne Änderung der Einstellung auch wirksam, wenn sich die Eigenfrequenzen der Strecke ändern.

Der Vorteil dieser Erfindung ist, dass man Lastschwingungen dämpfen kann, ohne eine zusätzliche Messeinrichtung betreiben zu müssen. Außerdem ist diese Lösung im Vergleich zu z.B. anderen Lösungen robuster, weil sie nur auf vorhandene Messgrößen und das nichtveränderliche Motorträgheitsdrehmoment $J_M$ zugreift. Die Lasteigenschaften (Federsteifigkeit, Lastträgheit) spielen keine Rolle mehr. Natürlich beeinflusst die Strecke die Eigenfrequenz und damit auch die optimale Einstellung der Rückführverstärkung und des Bandpasses, man kann hier aber robuste Einstellungen wählen, denn die Dämpfungswirkung bleibt auch bei nicht optimaler Einstellung erhalten, wenn auch nicht ganz so stark. Die Erfindung kann insbesondere in Verbindung mit dem APC-System verwendet werden, als auch bei jedem anderen System zum Einsatz kommen.

**Patentansprüche**

1.  Verfahren zur Dämpfung von Lastschwingungen in einer Lastmechanik (26) mit einem geregelten Antrieb (32), bei dem eine Last (2) mechanisch mit einem Motor (6) über ein Federelement (28) gekoppelt ist,
    **gekennzeichnet durch**

    - Ermittlung zumindest eines Winkelgeschwindigkeit-Istwerts ($\omega_{Mist}$),
    - Bestimmung eines Motorträgheitsmoments ($J_M$),
    - Ermittlung eines Motordrehmoment-Werts, insbesondere eines Motordrehmoment-Istwerts ($M_{ist}$),
    - Berechnung eines Federdrehmoments ($M_F$) aus dem Winkelgeschwindigkeit-Istwert ($\omega_{Mist}$), dem Motorträgheitsdrehmoment ($J_M$) sowie dem Motordrehmoment-Wert, insbesondere dem Motordrehmoment-Istwert ($M_{ist}$),
    - Zuführen des Federdrehmoments ($M_F$) zu einer Dämpferaufschaltung (44) zur Dämpfung der Lastschwingungen.

2.  Verfahren zur Dämpfung von Lastschwingungen nach Anspruch 1,
    **dadurch gekennzeichnet, dass** zunächst eine Ermittlung zumindest des Winkel-Istwerts ($\Phi_{Mist}$) durch einen Sensor und/oder ein Messsystem erfolgt und aus diesem der Winkelgeschwindigkeit-Istwert ($\omega_{Mist}$) ermittelt wird.

3.  Verfahren zur Dämpfung von Lastschwingungen nach einem der vorhergehenden Ansprüche,
    **dadurch gekennzeichnet, dass** ein erster Zwischenwert ($ZW_1$) durch Anwendung der Differentiation erster Ordnung nach der Zeit (t) auf den Winkelgeschwindigkeit-Istwert ($\omega_{Mist}$) und Beaufschlagung, insbesondere Multiplikation, mit dem Motorträgheitsdrehmoment ($J_M$) ermittelt wird.

4.  Verfahren zur Dämpfung von Lastschwingungen nach einem der vorhergehenden Ansprüche,
    **dadurch gekennzeichnet, dass** die Lastmechanik (26) zudem noch ein Motormodell mit Stromregler (38) umfasst, welcher dem geregelten Antrieb (32) vorgeschaltet ist und wobei aus dem gemessenen Strom und dem Motormodell mit Stromregler (38) der Motordrehmoment-Wert, insbesondere der Motordrehmoment-Istwert ($M_{ist}$) bestimmt wird.

5.  Verfahren zur Dämpfung von Lastschwingungen nach einem der vorhergehenden Ansprüche 1-3,
    **dadurch gekennzeichnet, dass** die Lastmechanik (26) zudem noch ein Motormodell mit Stromregler (38) umfasst, welcher dem geregelten Antrieb (32) vorgeschaltet ist und der Winkelgeschwindigkeit-Istwert ($\omega_{Mist}$) im geberlosen Betrieb aus dem Motormodell berechnet wird.

6.  Verfahren zur Dämpfung von Lastschwingungen nach Anspruch 4 oder 5,
    **dadurch gekennzeichnet, dass** der Motordrehmoment-Wert, insbesondere der Motordrehmoment-Istwert ($M_{ist}$)

einer Filterung, insbesondere einer Glättung, zum Bilden eines zweiten Zwischenwerts ($ZW_2$) zugeführt wird.

7. Verfahren zur Dämpfung von Lastschwingungen nach Anspruch 6 und Anspruch 3,
**dadurch gekennzeichnet, dass** der erste Zwischenwert ($ZW_1$) und der zweite Zwischenwert ($ZW_2$) einem Subtrahierer (83) zum Berechnen des Federdrehmoments ($M_F$) zugeführt werden.

8. Verfahren zur Dämpfung von Lastschwingungen nach Anspruch 1,
**dadurch gekennzeichnet, dass** die Dämpferaufschaltung (44) zumindest zwei Dämpferpassagen ($56_{1,2}$) aufweist, wobei zumindest einer der beiden Dämpferpassagen ($56_{1,2}$) ein integrales Federmoment ($\int M_F$) zugeführt wird, indem

- ein dritter Zwischenwert ($ZW_3$) durch die Multiplikation des ermittelte Winkelgeschwindigkeit-Istwert ($\omega_{Mist}$) mit dem Motorträgheitsmoment ($J_M$) sowie anschließender Zuführung zu einem Hochpassfilter (91) bestimmt wird,
- ein vierter Zwischenwert ($ZW_4$) durch Integration (92) des ermittelten Motordrehmoment-Werts, insbesondere des ermittelten Motordrehmoment-Istwerts ($M_{ist}$) ohne Offset bestimmt wird,
- und indem zur Bestimmung des integralen Federmoments ($\int M_F$) der dritte Zwischenwert ($ZW_3$) und der vierte Zwischenwert ($ZW_4$) einem Subtrahierer (93) zugeführt werden und anschließend das integrale Federmoment ($\int M_F$) der zweiten Dämpferpassage (44) zugeführt wird.

9. Verfahren zur Dämpfung von Lastschwingungen nach einem der vorhergehenden Ansprüche,
**dadurch gekennzeichnet, dass** das Federdrehmoment ($M_F$) einem APC-System als Dämpferaufschaltung zugeführt wird.

10. Verfahren zur Dämpfung von Lastschwingungen nach einem der vorhergehenden Ansprüche,
**dadurch gekennzeichnet, dass** die Dämpferaufschaltung (44) durch zumindest eine erste Dämpfungspassage ($56_1$, $56_2$) ausgestaltet wird zum Ermitteln zumindest einer Dämpfungsfrequenz ($Df_1$, $Df_2$) mit einer Eigenfrequenz ($f_1$, $f_2$) zum Bedämpfen wenigstens einer Lastschwingung, insbesondere durch gegengekoppelte Aufschaltung auf einen vorbestimmten Winkelgeschwindigkeit-Sollwert ($\omega_{Lsoll}$).

11. Verfahren zur Dämpfung von Lastschwingungen nach Anspruch 10,
**dadurch gekennzeichnet, dass** die erste Dämpfungspassage ($56_1$, $56_2$) eingangsseitig zumindest einen ersten Bandpass ($62_1$, $62_2$) aufweist, welchem zumindest das Federdrehmoment ($M_F$) zugeführt wird.

12. Vorrichtung zur Dämpfung von Lastschwingungen umfassend einem geregelten Antrieb (32), bei dem eine Last (2) mechanisch mit einem Motor (6) über ein Federelement (28) gekoppelt ist,
**dadurch gekennzeichnet, dass** die Ermittlung zumindest eines Winkelgeschwindigkeit-Istwerts ($\omega_{Mist}$) sowie eines Motordrehmoment-Werts, insbesondere eines Motordrehmoment-Istwerts ($M_{ist}$) und eine Bestimmung eines Motorträgheitsmoments ($J_M$) vorgesehen ist, und anschließend eine Berechnung eines Federdrehmoments ($M_F$) aus dem Winkelgeschwindigkeit-Istwert ($\omega_{Mist}$), dem Motorträgheitsdrehmoment ($J_M$) sowie dem Motordrehmoment-Wert, insbesondere dem Motordrehmoment-Istwert ($M_{ist}$), sowie eine Zuführung dieses Federdrehmoments ($M_F$) zu einer Dämpferaufschaltung (44) zur Dämpfung der Lastschwingungen vorgesehen ist.

13. Vorrichtung zur Dämpfung von Lastschwingungen nach Anspruch 12,
**dadurch gekennzeichnet, dass** ein Sensor und/oder ein Messsystem zur Ermittlung zumindest des Winkel-Istwerts ($\Phi_{Mist}$) vorgesehen ist, aus welchem der Winkelgeschwindigkeit-Istwerts ($\omega_{Mist}$) ermittelbar ist.

14. Vorrichtung zur Dämpfung von Lastschwingungen nach Anspruch 12 oder 13,
**dadurch gekennzeichnet, dass** eine Berechnung eines ersten Zwischenwerts ($ZW_1$) durch die Anwendung der Differentiation erster Ordnung nach der Zeit (t) auf den Winkelgeschwindigkeit-Istwert ($\omega_{Mist}$) und Beaufschlagung, insbesondere Multiplikation, des Ergebnisses mit dem Motorträgheitsdrehmoment ($J_M$) vorgesehen ist.

15. Vorrichtung zur Dämpfung von Lastschwingungen nach einem der Ansprüche 12-14,
**dadurch gekennzeichnet, dass** die Lastmechanik (26) zudem noch ein Motormodell mit Stromregler (38) umfasst, welcher dem geregelten Antrieb (32) vorgeschaltet ist, zur Bestimmung des Motordrehmoment-Werts, insbesondere des Motordrehmoment-Istwerts ($M_{ist}$).

16. Vorrichtung zur Dämpfung von Lastschwingungen nach der Anspruch 15,
**dadurch gekennzeichnet, dass** zum Bilden eines zweiten Zwischenwerts ($ZW_2$) eine Zuführung des Motordreh-

moment-Werts, insbesondere des Motordrehmoment-Istwerts ($M_{ist}$) zu einem Filter, insbesondere einem Filter mit einer Glättungsfunktion, vorgesehen ist.

17. Vorrichtung zur Dämpfung von Lastschwingungen nach Anspruch 16 und Anspruch 14,
**dadurch gekennzeichnet, dass** eine Berechnung des Federdrehmoments ($M_F$) durch Zuführen des ersten Zwischenwerts ($ZW_1$) und des zweiten Zwischenwerts ($ZW_2$) zu einem Subtrahierer (83) vorgesehen ist.

18. Vorrichtung zur Dämpfung von Lastschwingungen nach einem der vorhergehenden Ansprüche 12-17,
**dadurch gekennzeichnet, dass** ein APC-System als Dämpferaufschaltung zur Zuführung des Federdrehmoments ($M_F$) vorgesehen ist.

19. Vorrichtung zur Dämpfung von Lastschwingungen nach einem der vorhergehenden Ansprüche 12-18,
**dadurch gekennzeichnet, dass** die Dämpferaufschaltung (44) durch zumindest eine erste Dämpfungspassage ($56_1$, $56_2$) ausgestaltet ist zum Ermitteln zumindest einer Dämpfungsfrequenz ($Df_1$, $Df_2$) mit einer Eigenfrequenz ($f_1$, $f_2$) zum Bedämpfen wenigstens einer Lastschwingung, insbesondere durch gegengekoppelte Aufschaltung auf einen vorbestimmten Winkelgeschwindigkeit-Sollwert ($\omega_{Lsoll}$).

20. Vorrichtung zur Dämpfung von Lastschwingungen nach Anspruch 19,
**dadurch gekennzeichnet, dass** die erste Dämpfungspassage ($56_1$, $56_2$) eingangsseitig zumindest einen ersten Bandpass ($62_1$, $62_2$) aufweist zum Zuführen zumindest des Federdrehmoments ($M_F$).

21. Vorrichtung zur Dämpfung von Lastschwingungen nach einem der vorhergehenden Ansprüche 12-20,
**dadurch gekennzeichnet, dass** die Lastmechanik (26) zudem noch ein Motormodell mit Stromregler (38) umfasst, welcher dem geregelten Antrieb (32) vorgeschaltet ist und der Motordrehmoment-Wert, insbesondere der Motordrehmoment-Istwert ($M_{ist}$) im geberlosen Betrieb aus dem Motormodell berechenbar ist.

22. Vorrichtung zur Dämpfung von Lastschwingungen nach Anspruch 12,
**dadurch gekennzeichnet, dass** die Dämpferaufschaltung (44) zumindest zwei Dämpferpassagen ($56_{1,2}$) aufweist, wobei zumindest einer der beiden Dämpferpassagen ($56_{1,2}$) ein integrale Federmoment ($\int M_F$) zuführbar ist, umfassend:

- einem dritten Zwischenwert ($ZW_3$), welcher durch die Multiplikation des ermittelte Winkelgeschwindigkeit-Istwerts ($\omega_{Mist}$) mit dem Motorträgheitsmoment ($J_M$) sowie anschließender Zuführung zu einem Hochpassfilter (91) bestimmbar ist,
- einem vierten Zwischenwert ($ZW_4$), welcher durch Integration (92) des ermittelten Motordrehmoment-Werts, insbesondere des ermittelten Motordrehmoment-Istwerts ($M_{ist}$) ohne Offset bestimmbar ist,
- und wobei das integrales Federmoment ($\int M_F$) durch Zuführung des dritten Zwischenwerts ($ZW_3$) und des vierten Zwischenwerts ($ZW_4$) zu einem Subtrahierer (93) bestimmbar ist und das integrale Federmoment ($\int M_F$) nun der zweiten Dämpferpassage (44) zuführbar ist.

FIG 1

6

4

2

FIG 2

2

6

8

FIG 3

FIG 4

# FIG 5

EP 3 144 754 A1

## FIG 6

EP 3 144 754 A1

**EP 3 144 754 A1**

Europäisches Patentamt

European Patent Office

Office européen des brevets

# EUROPÄISCHER RECHERCHENBERICHT

Nummer der Anmeldung

EP 15 18 5655

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 101 37 496 A1 (SIEMENS AG [DE]) 17. Oktober 2002 (2002-10-17) * Absatz [0036] - Absatz [0046]; Abbildung 4 * ----- | 1-22 | INV. G05B19/19 F16F15/00 |
| A | DE 103 40 400 A1 (SIEMENS AG [DE]) 21. April 2005 (2005-04-21) * Absatz [0021] - Absatz [0026]; Abbildungen 4,5 * ----- | 1-22 | |
| A | US 2005/200328 A1 (EDSON RALPH D [US] ET AL) 15. September 2005 (2005-09-15) * Absatz [0033] - Absatz [0040]; Abbildung 1 * ----- | 1-22 | |

RECHERCHIERTE SACHGEBIETE (IPC)

G05B
F16F

Der vorliegende Recherchenbericht wurde für alle Patentansprüche erstellt

| Recherchenort | Abschlußdatum der Recherche | Prüfer |
|---|---|---|
| Den Haag | 22. April 2016 | Nettesheim, Johannes |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

15

## ANHANG ZUM EUROPÄISCHEN RECHERCHENBERICHT
## ÜBER DIE EUROPÄISCHE PATENTANMELDUNG NR.

EP 15 18 5655

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2016

| Im Recherchenbericht angeführtes Patentdokument | Datum der Veröffentlichung | Mitglied(er) der Patentfamilie | Datum der Veröffentlichung |
|---|---|---|---|
| DE 10137496 A1 | 17-10-2002 | KEINE | |
| DE 10340400 A1 | 21-04-2005 | KEINE | |
| US 2005200328 A1 | 15-09-2005 | CA 2561131 A1<br>EP 1726087 A1<br>US 2005200328 A1<br>WO 2005096490 A1 | 13-10-2005<br>29-11-2006<br>15-09-2005<br>13-10-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10246093 C1